# DEMANDE DE BREVET EUROPEEN

(11) **EP 1 936 988 A1**
(43) Date de publication de la demande: **25.06.2008**
(21) Numéro de dépôt: 06126789.4
(22) Date de dépôt: 21.12.2006
(51) Int. Cl.: H04N 7/24

(54) **Procédé d'envoi de produits multimédia à au moins une unité multimédia et procédé de traitement de ces produits multimédia**

(71) Demandeur: Nagravision S.A., 1033 Cheseaux-sur-Lausanne (CH)
(72) Inventeur: Robyr,Sébastien, 1066, Epalinges (CH); Thomas, Frédéric, 1213, Onex (CH); Molyneaux, Wendy, 1042, Bioley-Orjulaz (CH)
(74) Mandataire: Leman Consulting S.A.

(57) **Abrégé**

La présente invention concerne notamment un procédé de traitement de produits multimédia mémorisés sous forme de données numériques dans au moins une unité multimédia. Ce procédé comporte les étapes suivantes :
- réception d'une table de diffusion contenant au moins une indication d'un type de données propriétaire associé à un identifiant de paquet de données (PID) ainsi qu'à un marqueur;
- réception d'une table de correspondance entre la valeur du marqueur et le type de données réel;
- recherche des valeurs de marqueur figurant dans la table de diffusion PMT reçue par l'unité multimédia;
- recherche des valeurs de marqueur correspondantes dans la table de correspondance entre la valeur du marqueur et le type de données réel; et
- modification de la table de diffusion en remplaçant l'indication du type de données propriétaire de la table de diffusion par le type de données réel correspondant de la table de correspondance.

## Description

### DOMAINE TECHNIQUE

La présente invention concerne le domaine de l'envoi, du stockage et du traitement de produits, notamment de produits multimédias tels que des produits liés à des événements de télévision à péage, à une pluralité d'unités multimédia, en vue d'une utilisation ultérieure. Cette invention est en particulier appliquée au cas de la vidéo à la demande dans laquelle des produits sont envoyés à des unités multimédia ayant une mémoire de stockage. Ces produits peuvent être rendus accessibles dès leur stockage achevé ou au contraire, nécessiter l'envoi d'une clé pour qu'ils puissent être utilisés.

### TECHNIQUE ANTERIEURE

Lorsque des produits sont diffusés à destination d'unités multimédia, en particulier des produits de télévision à péage, deux approches sont actuellement utilisées. Une première approche est connue sous l'appellation "carrousel". Elle consiste à découper les données à transmettre en blocs, chaque bloc ayant un en-tête permettant de l'identifier. Ces blocs sont envoyés de façon cyclique aux unités multimédia concernées. Une unité multimédia mémorise ces blocs et reconstitue les données au moyen des en-têtes.

Cette approche est particulièrement utilisée lorsque les données à transmettre ont une taille relativement petite. En particulier, elle est utilisée pour transmettre des meta-données, des applications de jeu ou des pages web par exemple. Dans cette approche, la vitesse de diffusion des données n'est pas liée à la vitesse d'utilisation de ces données. Ceci présente l'avantage qu'il est possible de maximiser le contenu d'un bloc de données et par conséquent, d'optimiser l'utilisation de la bande passante.

Une autre approche permet d'envoyer un contenu audio/vidéo, en particulier sous la forme d'un flux du type Mpeg, à une unité multimédia. Selon cette approche, le flux est diffusé par un fournisseur de contenu. Ce flux est reçu par une unité multimédia, filtré au moyen d'un tuner, traité dans un démultiplexeur, puis stocké dans une mémoire telle qu'un disque dur par exemple, dans l'unité multimédia.

Cette approche est particulièrement adaptée à l'envoi de contenus de grande taille, notamment de produits liés à la télévision à péage. Le flux audio/vidéo peut être interprété immédiatement par l'unité multimédia. Dans ce cas toutefois, il est indispensable que la vitesse de diffusion des données soit égale à la vitesse d'utilisation. Cette contrainte implique un gaspillage important de la bande passante du fait qu'il est nécessaire de transmettre des paquets d'informations même si ces paquets sont vides, de façon à ce que les vitesses soient adaptées. En effet, certaines unités multimédia utilisent les contenus qu'ils reçoivent en direct, c'est-à-dire sans les stocker sur une mémoire, si ces contenus sont de type audio et/ou vidéo. Dans ce cas, si le débit de diffusion ne correspond pas à celui de la visualisation, l'unité multimédia peut afficher un écran noir ou se bloquer.

L'avantage de diffuser les données selon le principe du carrousel est donc une optimisation de l'utilisation de la bande passante. L'inconvénient de ce principe est qu'il n'est pas développé pour transmettre de grandes quantités de données. En effet, si l'on veut transmettre des fichiers de grande taille (de l'ordre de quelques GigaBytes) correspondant par exemple au contenu audio/vidéo d'un film complet, l'envoi par blocs de taille compatible avec le principe du carrousel, typiquement de 64kB, présente deux inconvénients. D'une part, chaque paquet contenant un en-tête, la proportion de la taille de l'en-tête par rapport à la taille du contenu audio/vidéo est peu favorable dans le sens qu'il y a une bande passante importante utilisée pour les en-têtes plutôt que pour du contenu audio/vidéo.

D'autre part, l'unité multimédia doit traiter chaque paquet pour en extraire le contenu et effectuer les vérifications d'usage. Ces vérifications permettent notamment de déterminer si un paquet a déjà été reçu, d'identifier le produit diffusé etc. Le traitement de chaque paquet devant être analysé au niveau de l'unité de traitement CPU, cette unité de traitement est fortement sollicitée, ce qui n'est pas optimal.

### EXPOSE DE L'INVENTION

Le but de l'invention est atteint par un procédé d'envoi de produits multimédia sous forme de données numériques à au moins une unité multimédia, ce procédé comportant les étapes suivantes :
- séparation des données numériques dudit produit multimédia en segments de produit;
- intégration de données de service à ces segments de produit;
- préparation d'une table de diffusion PMT, cette table contenant au moins une indication d'un type de données réel, associé à un identifiant de paquet de données ainsi qu'un marqueur, ce marqueur étant tel qu'il n'est pas modifié entre le moment de la préparation de la table et le moment de la réception par l'unité multimédia;
- modification de la table de diffusion PMT par transformation de l'indication du type de données réel en un type de données propriétaire, le type de données propriétaire étant tel que l'unité multimédia n'interprète pas les données de façon directe;
- envoi d'au moins un segment de produit à l'unité multimédia sur un premier canal;
- stockage dudit segment de produit dans une mémoire de l'unité multimédia;
- envoi de ladite table de diffusion PMT modifiée à l'unité multimédia ;
- envoi sur un second canal, de paquets de synchronisation indiquant au moins le commencement de l'envoi d'un segment de produit, un identifiant du produit auquel ce segment est lié, un identifiant de ce segment et un identifiant du premier canal;
- envoi sur ledit second canal, de paquets de synchronisation indiquant au moins la fin de l'envoi dudit segment de produit, un identifiant du produit auquel ce segment est lié, un identifiant de segment et un identifiant du premier canal;
- envoi d'une table de correspondance entre la valeur du marqueur et le type de données réel associé;
- recherche des valeurs de marqueur figurant dans la table de diffusion PMT reçue par l'unité multimédia, recherche des valeurs de marqueur correspondantes dans la table de correspondance entre la valeur du marqueur et le type de données réel associée et modification de la table de diffusion en remplaçant l'indication du type de données propriétaire de la table de diffusion par le type de données réel correspondant de la table de correspondance.

Le but de l'invention est également atteint par un procédé de traitement de produits multimédia mémorisés sous forme de données numériques dans au moins une unité multimédia, ce procédé comportant les étapes suivantes :
- réception d'une table de diffusion contenant au moins une indication d'un type de données propriétaire associé à un identifiant de paquet de données (PID) ainsi qu'à un marqueur;
- réception d'une table de correspondance entre la valeur du marqueur et le type de données réel;
- recherche des valeurs de marqueur figurant dans la table de diffusion PMT reçue par l'unité multimédia;
- recherche des valeurs de marqueur correspondantes dans la table de correspondance entre la valeur du marqueur et le type de données réel; et
- modification de la table de diffusion en remplaçant l'indication du type de données propriétaire de la table de diffusion par le type de données réel correspondant de la table de correspondance.

Selon la présente invention, des données audio/vidéo sont diffusées à destination des unités multimédia des utilisateurs. Toutefois, au lieu d'utiliser un format standard audio/vidéo reconnu de façon conventionnelle par les unités multimédia, ces données sont envoyées dans un format particulier qui autorise l'envoi de blocs ou segments de grande taille. Ces segments de grande taille ne sont pas directement utilisables par les unités multimédia standards. Ils sont donc traités ensuite au niveau de l'unité multimédia pour les rendre utilisables.

Selon ce procédé, le rapport entre la taille des données audio/vidéo d'un segment ou plus généralement des contenus à valeur ajoutée par rapport à la taille des données de service telles que les en-têtes est très avantageux du fait de la grande taille des segments qu'il est possible de transmettre. De plus, la charge de l'unité de traitement CPU est minime du fait que la majorité du traitement peut être réalisé au niveau matériel (hardware).

Le procédé de l'invention permet en outre une optimisation de l'utilisation de la bande passante. En effet, les données envoyées ne sont pas utilisées immédiatement, mais sont stockées avant leur utilisation. De ce fait, il n'est pas nécessaire que le contenu d'un segment envoyé corresponde à la vitesse d'utilisation du contenu de ce segment. En particulier lorsque l'audio ou la vidéo ne contiennent pas d'information (par exemple image noire ou pas de son), il n'est pas nécessaire d'envoyer des blocs vides. Ceci permet d'avoir des segments ayant un maximum d'informations utiles.

Le procédé de l'invention permet en outre de tenir compte des manipulations effectuées sur les données par le fournisseur de contenu avant la diffusion des produits. De cette manière, le procédé est totalement transparent pour ce fournisseur et ne nécessite aucune modification de sa part. Le traitement des données est effectué d'une part au moment de la préparation des données par un centre de gestion et d'autre part au niveau de l'unité multimédia.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 illustre un produit tel qu'un produit de télévision à péage à transmettre selon le procédé de l'invention;
- la figure 2 représente la transmission de produits de la figure 1; et
- la figure 3 représente un détail de la figure 2.

### MANIERES DE REALISER L'INVENTION

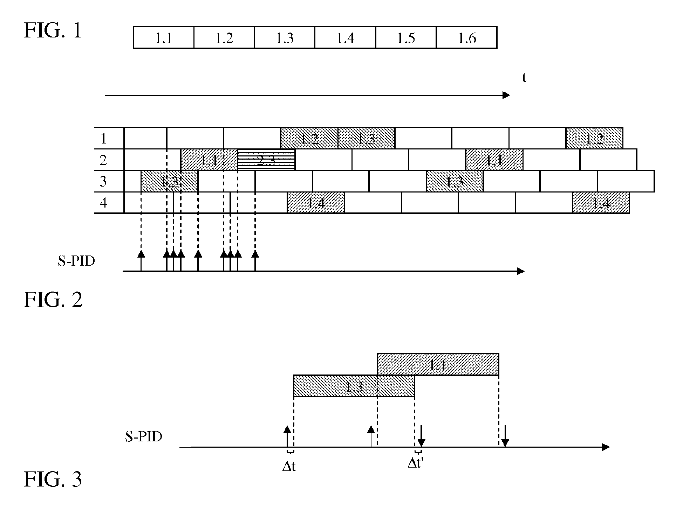

La figure 1 illustre de façon schématique un produit multimédia, par exemple un produit de télévision à péage tel que traité dans la présente invention. Ce produit est représenté comme formé de six segments de tailles identiques, numérotés de 1.1 à 1.6. Sur cette figure, la longueur d'un segment représente sa taille sous forme de fichier numérique. Le contenu de chacun de ces segments correspond à un certain temps de diffusion du produit, par exemple 10 minutes. Selon un mode de réalisation avantageux, chaque segment peut contenir des données correspondant sensiblement à une même durée de diffusion du produit. Dans ce cas, les fichiers ont une taille égale. Par contre, comme une durée de visualisation déterminée ne correspond pas toujours à la même durée de diffusion, la durée de visualisation pour chaque segment est variable.

La figure 2 illustre la manière de transmettre des produits multimédia. Ces produits sont scindés en segments, comme indiqué en référence à la figure 1. Ces segments sont envoyés sur différents canaux ou services. Ces services peuvent être différents pour différents segments d'un même produit. A titre d'exemple, le segment 1.1 est envoyé sur un canal numéroté 2, le segment 1.2 est envoyé sur le canal 1 alors que le segment 1.3 est envoyé sur le canal 3. De plus, les segments ne sont pas nécessairement diffusés dans l'ordre chronologique. Ainsi, dans l'exemple illustré, le segment 1.4 est diffusé sur le service 4 avant le segment 1.3 sur le canal 1. Comme on peut le constater au vu de la figure 2, plusieurs segments de produits différents ou identiques peuvent être envoyés simultanément, ce qui signifie qu'un ou plusieurs segments peuvent être envoyés pendant qu'un autre segment est envoyé sur un autre canal. Comme dans le cas de l'utilisation d'un carrousel, ces segments sont renvoyés à intervalles réguliers, de sorte qu'une unité multimédia qui n'a pas reçu un segment dans sa totalité ou tous les segments liés à un produit donné peut recevoir les éléments manquants lors d'une nouvelle diffusion de ces éléments.

Les services ou canaux utilisés pour la diffusion des segments sont signalés de manière standard dans une table de diffusion des services (PMT = Program map table).

De façon conventionnelle, cette table de diffusion PMT contient des données d'identification de paquets PID (Packet identification data), chacun de ces paquets étant associé au type réel de données à transmettre et éventuellement à un marqueur. Ce marqueur est de format propriétaire et n'est interprété que par les systèmes prévus à cet effet.

Un exemple de table de diffusion PMT telle qu'utilisée dans l'art antérieur peut avoir la forme suivante :

| **PID** | **Type** | **Marqueur** |
|---|---|---|
| 0x18 | Vidéo | 15 |
| 0x19 | Audio | A8 |
| 0x6 | Data | 5B |

Les données de type audio et vidéo sont directement interprétées par l'unité multimédia. Les données de type Data sont stockées dans l'unité multimédia et sont traitées dans celle-ci.

Selon l'invention, l'indication du type de contenu transmis est modifiée pour les données audio et vidéo. Ces données sont indiquées comme étant d'un type propriétaire, en particulier du type Data. De cette manière, elles sont stockées dans l'unité multimédia sans être interprétées par celle-ci. De ce fait, les ressources de l'unité de traitement CPU ne sont pas sollicitées. La table de diffusion précédente devient donc :

| **PID** | **Type** | **Marqueur** |
|---|---|---|
| 0x18 | Data | 15 |
| 0x19 | Data | A8 |
| 0x6 | Data | 5B |

De façon bien connue, les identifiants de paquets PID peuvent être modifiés par le fournisseur de contenu avant la diffusion. Ainsi, il n'est pas possible de s'assurer qu'un identifiant donné corresponde à un type de données constant lors de la préparation du contenu et lors de sa réception par une unité multimédia. Par contre, le marqueur ayant un format propriétaire, il n'est pas modifié par le fournisseur. La table telle qu'illustrée ci-dessus pourrait être transformée par le fournisseur en :

| **PID** | **Type** | **Marqueur** |
|---|---|---|
| 0x56 | Data | 15 |
| 0x21 | Data | A8 |
| 0x18 | Data | 5B |

Comme on peut le constater en comparant la table ci-dessus avec la table précédente, les types de données et les marqueurs n'ont pas changé alors que l'identifiant des paquets PID a été changé par le fournisseur.

Généralement, les données de type Data sont ignorées par les unités multimédia. Dans notre cas, ces données étant le contenu audio/vidéo du produit à mémoriser, il est nécessaire de créer un mécanisme particulier permettant de recevoir, de stocker et de traiter ces données.

Ce mécanisme fonctionne de la manière suivante. Peu avant l'envoi d'un segment, un paquet de synchronisation est transmis avec une donnée d'identification de paquet PID spécifique (par exemple PID 0x100) commun à tous les services d'un même transport. Ceci est illustré au bas de la figure 2 et plus en détail par la figure 3 qui indique un temps de décalage Δt entre l'envoi du paquet de synchronisation et le début de l'envoi du segment. Ce paquet de synchronisation, de type Data et signalé de façon standard dans la table de diffusion (PMT), est réceptionné par un logiciel dédié dans l'unité multimédia. Ce paquet de synchronisation décrit le contenu du prochain segment qui sera diffusé sur un service donné et indique le début de sa diffusion.

Lorsqu'un paquet de synchronisation indique le début d'un nouveau segment, le logiciel dédié est en mesure de déterminer si le segment considéré doit être mémorisé ou non. S'il doit être mémorisé, l'unité multimédia mets en place les filtres requis pour réceptionner ce service et stocker le contenu sur une mémoire, sans aucun traitement et donc directement au travers d'une mémoire à accès direct DMA (Direct access memory).

Le paquet de synchronisation contient une description du segment et en particulier sa taille, un identifiant du produit auquel il appartient, le nombre total de segments associés au produit auquel appartient le segment reçu et des informations de priorité décrites en détail plus bas. Il peut en outre contenir des informations relatives à des catégories ou des sous-catégories de produits (films - récents/westerns,... ; sport - football/rugby,...), ainsi que des informations de qualité, également décrites en détail plus bas.

Ce paquet de synchronisation contient en outre des données permettant de reconstruire la table de diffusion PMT originelle et en particulier de réattribuer les types réels de données, en particulier "Audio" et "Vidéo" aux informations concernées. Ces données "de reconstruction" de la table comportent une table de correspondance entre la valeur du marqueur et les types réels de données du flux associé. L'opération de mise à jour ou de reconstruction des tables de diffusion PMT est effectuée soit lors de la fin de chaque segment, soit lorsque les segments d'un produit sont tous arrivés. La valeur du marqueur est utilisée pour modifier le type de données. La signalisation "data" disparaît au profit du type réel, audio ou vidéo. La table de diffusion reconstruite devient une table de visualisation.

Pour l'exemple de table donné plus haut, on enverra une table de mise à jour ayant la forme suivante :

| **Marqueur** | **Type** |
|---|---|
| 15 | Vidéo |
| A8 | Audio |
| 5B | Data |

Un paquet de synchronisation "inverse", illustré par la flèche pointant vers le bas de la figure 3, informe l'unité multimédia que la diffusion du segment est terminée. L'arrivée de ce paquet permet alors de libérer la réception du service et d'effectuer les opérations de vérification de la bonne réception dudit segment. La valeur d'un compteur de segments est comparée au nombre total de segments transmis dans le paquet de synchronisation.

Lorsque la totalité des segments d'un produit donné a été reçue et que ces segments ont été stockés de façon correcte dans la mémoire de l'unité multimédia, ce produit peut être accessible de façon conventionnelle. En particulier, il peut être directement accessible sans nécessiter l'acquisition de droits particuliers ou au contraire requérir l'obtention d'un droit ou d'une clé avant de pouvoir être utilisé.

Selon un mode de réalisation particulier de l'invention, la bonne réception de l'ensemble d'un produit est vérifiée. Dans cette réalisation, on compare notamment le nombre de paquets audio/vidéo réellement reçus pour un produit donné au nombre total de paquets que ce produit contient. Ce nombre total est indiqué dans le paquet de synchronisation. Si le nombre réel est supérieur au nombre total, le processus d'enregistrement est arrêté. En effet, dans ce cas, il est certain qu'une erreur s'est produite et que des données qui ne sont pas liées au produit considéré ont été enregistrées.

Si le nombre réel est inférieur au nombre total théorique, cela signifie en principe que des segments n'ont pas été reçus. Dans le procédé de l'invention, il est possible de définir un indice de qualité. Celui-ci définit le rapport entre la quantité d'informations reçues et la quantité totale d'informations pour un produit donné. Si la quantité d'informations reçues pour un produit donné est supérieure à la quantité d'informations exigée par l'indice de qualité, le produit est considéré comme stocké de façon correcte. Au contraire, si cette quantité d'informations reçues est inférieure à ce qui est exigé par l'indice de qualité, il est nécessaire de mémoriser plus d'informations. Ceci peut se faire en attendant la rediffusion d'un ou plusieurs segments manquants du produit considéré.

L'indice de qualité pour un produit donné est en principe intégré dans les paquets de synchronisation correspondants.

Comme indiqué précédemment, l'envoi des segments multimédia peut se faire sur plusieurs services différents. De plus, plusieurs produits sont envoyés simultanément ou en parallèle. Ainsi, le segment référencé 1.1 sur la figure 2 est envoyé sur le service 2. Il peut être suivi, sur ce même service 2, par un segment 2.3 correspondant à un autre produit multimédia. Le segment 2.3 se chevauche avec le segment 1.2 diffusé sur le service 1. Le procédé prévoit une gestion de la priorité de sorte que certains segments sont mémorisés alors que d'autres ne le sont pas.

Cette gestion de la priorité peut se baser sur trois critères. Le premier d'entre eux est une priorité décidée par l'utilisateur. Celui-ci peut par exemple indiquer qu'il souhaite recevoir une catégorie de produits, par exemple les films récents, alors qu'il souhaite ne pas recevoir les matchs de rugby. Ce critère est introduit au niveau de l'unité multimédia.

Une autre priorité se base sur le degré d'achèvement de l'enregistrement d'un produit. Selon ce critère, si par exemple 90% des segments d'un produit ont été enregistrés, le procédé favorisera l'enregistrement des segments restants de ce produit par rapport aux segments d'autres produits non encore enregistrés. Cette manière de faire évite que l'on enregistre de nombreux segments de produits différents sans enregistrer la totalité des segments d'un produit. Ce critère est géré automatiquement de façon logicielle par l'unité multimédia.

Le troisième critère de priorité est une valeur introduite par le fournisseur. Cette valeur peut être introduite par exemple pour favoriser l'enregistrement d'une nouveauté qui a de fortes chances d'être visualisée par un grand nombre d'utilisateurs, au détriment de produits à usage restreint. Ce dernier degré de priorité est contenu dans les paquets de synchronisation.

La combinaison de ces trois critères permet de déterminer quels seront les segments mémorisés ou non.

La présente invention a été décrite dans une application agissant sur des données de type réel audio et/ou vidéo. Le procédé reste toutefois valide pour n'importe quel type de données, par exemple du teletext ou des applications interactives notamment.

## Revendications

1. Procédé d'envoi de produits multimédia sous forme de données numériques à au moins une unité multimédia, ce procédé comportant les étapes suivantes :
- séparation des données numériques dudit produit multimédia en segments de produit;
- intégration de données de service à ces segments de produit;
- préparation d'une table de diffusion PMT, cette table contenant au moins une indication d'un type de données réel, associé à un identifiant de paquet de données (PID) ainsi qu'un marqueur, ce marqueur étant tel qu'il n'est pas modifié entre le moment de la préparation de la table et le moment de la réception par l'unité multimédia;
- modification de la table de diffusion PMT par transformation de l'indication du type de données réel en un type de données propriétaire, le type de données propriétaire étant tel que l'unité multimédia n'interprète pas les données de façon directe;
- envoi d'au moins un segment de produit à l'unité multimédia sur un premier canal;
- stockage dudit segment de produit dans une mémoire de l'unité multimédia;
- envoi de ladite table de diffusion PMT modifiée à l'unité multimédia ;
- envoi sur un second canal, de paquets de synchronisation indiquant au moins le commencement de l'envoi d'un segment de produit, un identifiant du produit auquel ce segment est lié, un identifiant de ce segment et un identifiant du premier canal;
- envoi sur ledit second canal, de paquets de synchronisation indiquant au moins la fin de l'envoi dudit segment de produit, un identifiant du produit auquel ce segment est lié, un identifiant de segment et un identifiant du premier canal;
- envoi d'une table de correspondance entre la valeur du marqueur et le type de données réel associé;
- recherche des valeurs de marqueur figurant dans la table de diffusion PMT reçue par l'unité multimédia, recherche des valeurs de marqueur correspondantes dans la table de correspondance entre la valeur du marqueur et le type de données réel associée et modification de la table de diffusion en remplaçant l'indication du type de données propriétaire de la table de diffusion par le type de données réel correspondant de la table de correspondance.

2. Procédé d'envoi de produits multimédia selon la revendication 1, **caractérisé en ce que** le flux de synchronisation comprend au moins une indication parmi : un identifiant de l'événement, un identifiant du segment de cet événement, le nombre total de segments que cet événement comporte, l'indication de début ou de fin de segment, la taille totale de l'événement, une date d'expiration, une priorité ou une indication de qualité.

3. Procédé d'envoi de produits multimédia selon la revendication 1, **caractérisé en ce que** le type de données réel est choisi parmi l'audio, la vidéo, le teletext ou des données associées à des applications interactives.

4. Procédé d'envoi de produits multimédia selon la revendication 1, dans lequel plusieurs segments de produit sont envoyés simultanément sur plusieurs canaux différents, **caractérisé en ce que** le choix du segment qui est mémorisé au détriment d'autres segments envoyés simultanément dépend d'au moins une règle de priorité.

5. Procédé d'envoi de produits multimédia selon la revendication 1, **caractérisé en ce que** la règle de priorité est définie par une catégorie choisie par un utilisateur.

6. Procédé d'envoi de produits multimédia selon la revendication 1, **caractérisé en ce que** la règle de priorité dépend du rapport entre le nombre de segments de produit déjà mémorisés pour un produit donné et le nombre total de segments de ce produit.

7. Procédé d'envoi de produits multimédia selon la revendication 1, **caractérisé en ce que** la règle de priorité est imposée par le fournisseur de contenu.

8. Procédé de traitement de produits multimédia mémorisés sous forme de données numériques dans au moins une unité multimédia, ce procédé comportant les étapes suivantes :
- réception d'une table de diffusion contenant au moins une indication d'un type de données propriétaire associé à un identifiant de paquet de données (PID) ainsi qu'à un marqueur;
- réception d'une table de correspondance entre la valeur du marqueur et le type de données réel;
- recherche des valeurs de marqueur figurant dans la table de diffusion PMT reçue par l'unité multimédia;
- recherche des valeurs de marqueur correspondantes dans la table de correspondance entre la valeur du marqueur et le type de données réel; et
- modification de la table de diffusion en remplaçant l'indication du type de données propriétaire de la table de diffusion par le type de données réel correspondant de la table de correspondance.

9. Procédé de traitement de produits multimédia selon la revendication 8, **caractérisé en ce que** pour un produit donné, on compte le nombre de segments reçus et mémorisés et on le compare au nombre total de segments correspondants à ce produit.

10. Procédé de traitement de produits multimédia selon la revendication 9, **caractérisé en ce que** l'on arrête le traitement des segments d'un produit lorsque le nombre de segments reçus dépasse le nombre de total de segments correspondants à ce produit.
